# EUROPEAN PATENT SPECIFICATION

(11) **EP 1 464 553 B1**
(45) Date of publication and mention of the grant of the patent: **17.08.2005**
(21) Application number: 03380084.8
(22) Date of filing: 02.04.2003
(51) Int. Cl.: B60T 7/06, B60R 21/09

(54) **Vehicle pedal set with device for release in case of impact**
Pedalanordnung für ein Kraftfahrzeug mit Trennvorrichtung bei einem Aufprall
Dispositif de pédale de véhicule avec mécanisme d'écartement en cas de choc

(43) Date of publication of application: 06.10.2004
(73) Proprietor: Autotech Engineering, A.I.E., 48220 Abadino (Vizcaya) (ES)
(72) Inventor: Castillo Gonzalez, Jaime, 48220 Abadino (Vizcaya) (ES)
(74) Representative: Carpintero Lopez, Francisco

(56) References cited:
- EP-A- 0 827 885
- EP-A- 1 038 720
- EP-A- 1 247 701

## Description

### OBJECT OF THE INVENTION

The present invention relates to a vehicle brake pedal assembly having a system for releasing the brake pedal if the vehicle suffers an impact. This is, the brake pedal is released from the attachments to its supports so that it is not an obstacle in the displacement of the steering column caused by the impact, thereby preventing harm to the driver.

Such an assembly is for instance known from EP-A-1 247 701.

This system uses the motion of the steering column to make it swivel and thereby release the brake pedal. This system can also be applied to the clutch pedal.

### BACKGROUND OF THE INVENTION

In a frontal collision of a vehicle the engine, the steering column and other elements undergo important displacements towards the space occupied by the driver. In order to prevent personal injury due to the intrusion of these elements in the vehicle's passenger space, components and systems are designed to minimise or eliminate any harmful effects on the driver.

More specifically, in the event of a frontal collision the steering column undergoes sideways motions that tend to make it collide with the first pedal it meets, normally the brake pedal as it is adjacent to the steering column.

The collision between the column and the pedal prevents the steering column from moving freely, causing reaction forces that can result in injury to the driver.

The pedal will normally remain attached to its rotation shaft, and is mounted by means of a hollow tube riveted or welded to the body of the pedal, through which a cylindrical shaft passes crossing orifices made in corresponding supports to which it is attached with a nut.

In the event of an impact the pedal will normally remain attached to its rotation shaft and will constitute an obstacle in the displacement of the steering column.

### DESCRIPTION OF THE INVENTION

The pedal assembly of the invention constituting the object of this invention is designed to solve the above problems, including a system that releases the brake pedal in the event of a frontal collision of the vehicle; this system acts on the support of the steering column when the latter moves as a result of a collision, so that the brake pedal loses one of its support points corresponding to its rotation shaft, thereby making the pedal fall and allowing the steering column to continue its motion without the brake being an obstacle.

The operational principle of this release system is based on the brake pedal revolving about its rotation shaft in a different way than is normal.

In this invention the hollow tube that is normally joined to the pedal and revolves about a cylindrical shaft is not present. The pedal instead incorporates a solid welded rod that turns with the pedal inside four clamps, two upper clamps and two lower clamps.

The solid rod does not cross the brake supports but is instead placed between them, embedded in the four clamps. More specifically, the two lower clamps are fixed to the brake supports at all times, both during the normal operation of the pedal assembly and in the event of a frontal collision. These two clamps constitute the lower support of the solid rod that acts as the rotation shaft of the brake pedal.

The upper shafts are housed in a rocker provided with a shaft for rotation about the supports. The rocker is attached to the supports by two fuses that join the rocker to the supports in the normal operation of the pedal assembly.

After the rocker is fixed in its upper position, the upper clamps together with the lower clamps define a cylindrical space inside which revolves the solid rod or pedal rotation shaft.

According to the assembly described, at the time of impact the steering column support is displaced against the pedal assembly, colliding with the rocker and breaking its fuses, the upper clamps retract with the rocker, which will turn about its rotation shaft impelled by the steering column support.

The solid rod or brake pedal shaft loses its upper support, as the upper clamps are removed, and thus turns freely about its articulation on the hydraulic lever. In this situation the pedal is not an obstacle for the displacement of the steering column.

### DESCRIPTION OF THE DRAWINGS

As a complement of the description being made and in order to aid a better understanding of the characteristics of the invention, according to an example of a preferred embodiment, a set of drawings are accompanied as an integral part of the description where, for purposes of illustration only and in a non-limiting manner, the following is shown:

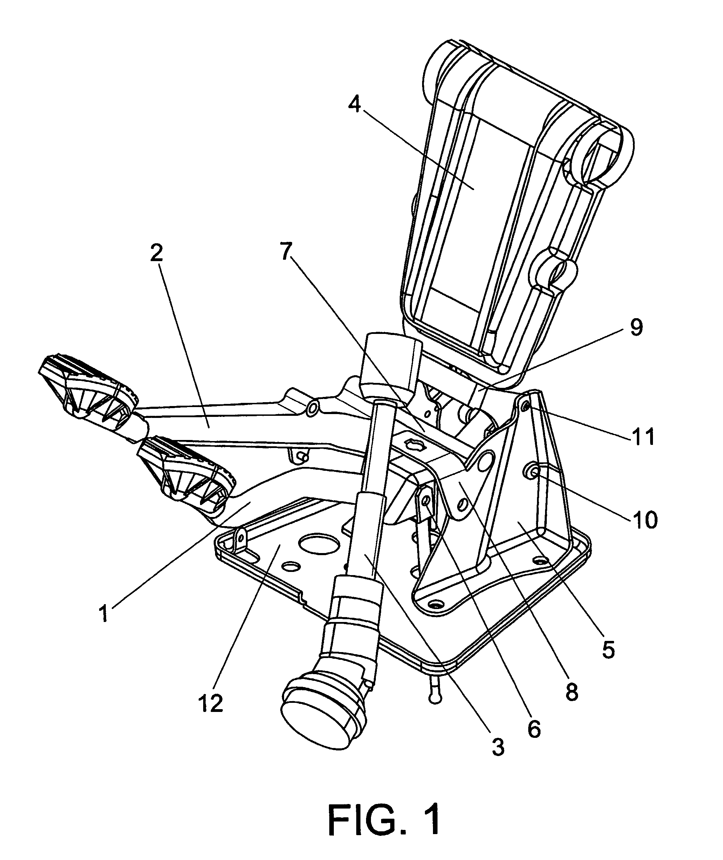

Figure 1.- Shows a general perspective view from the front of the pedal assembly showing the steering column, the clutch and brake pedals, their corresponding supports and the system for releasing the brake pedal in the case of an impact.

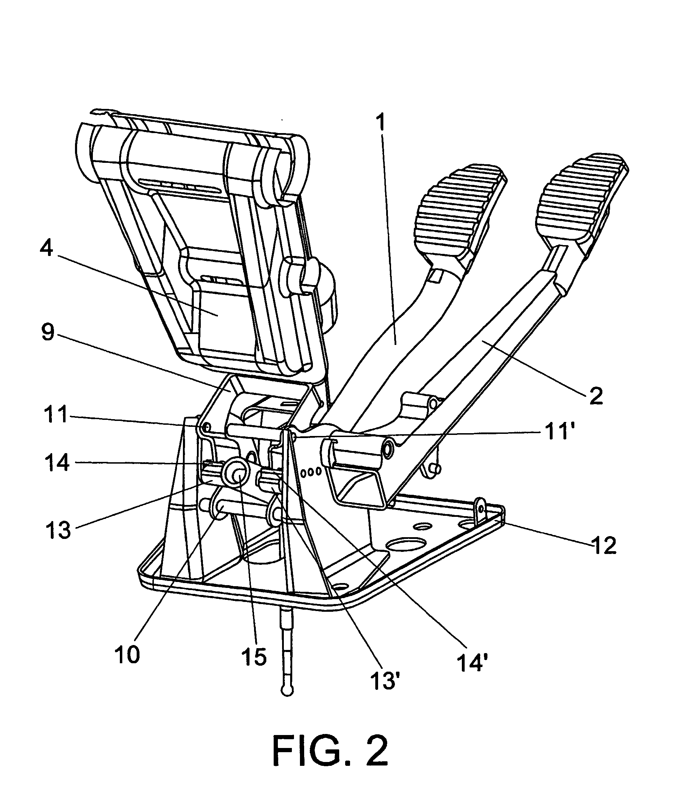

Figure 2.- Shows a general perspective view from the rear showing in detail the component elements of the release system, such as the lower and upper clamps, the rocker and the rod welded to the brake pedal that acts as the rotation shaft.

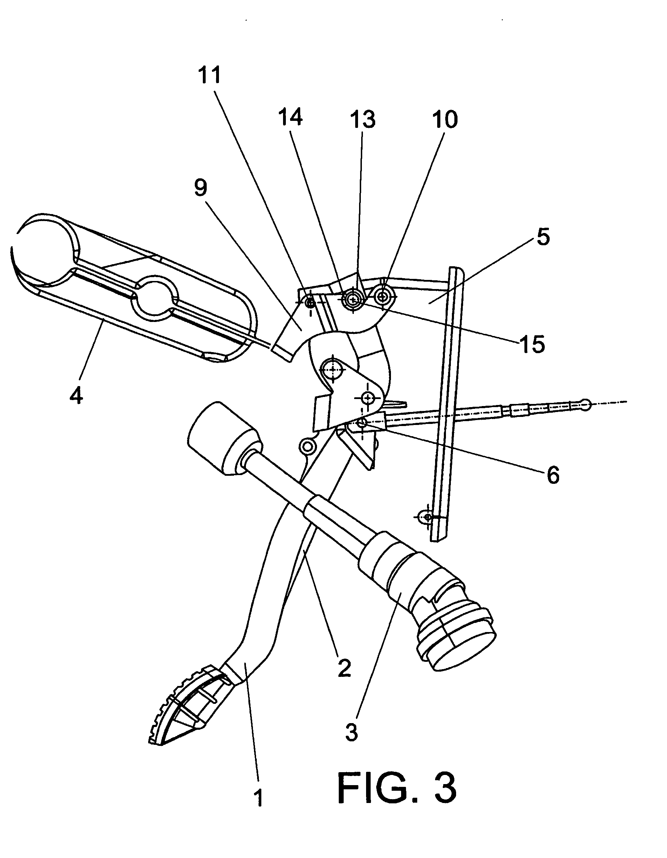

Figure 3.- Shows a side view of the pedal assembly before the impact, where one of the supports is not represented in order to show more clearly the rocker and the rod embedded between the lower and upper clamps during normal operation, as well as the brake pedal in the foreground partially covering the clutch pedal.

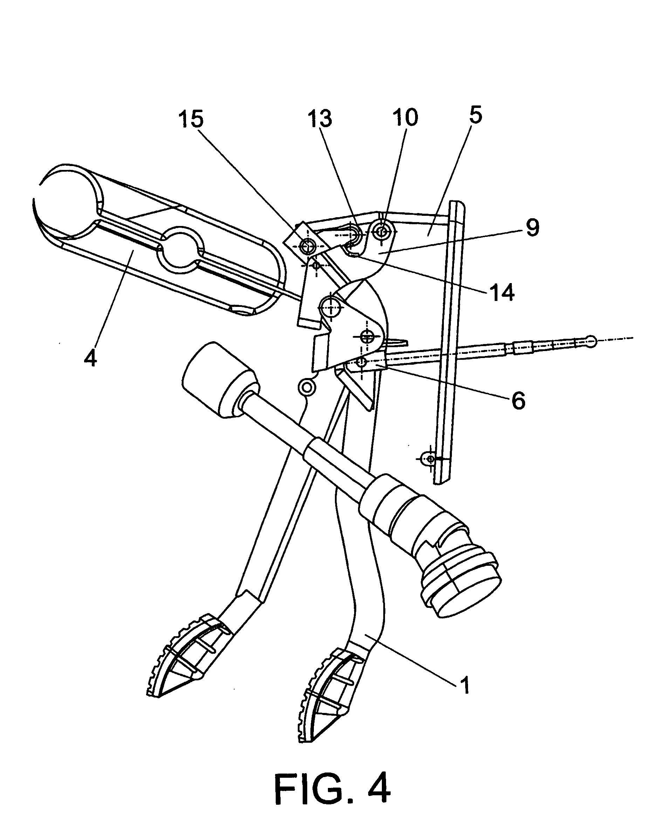

Figure 4.- Shows a side view of the pedal assembly after a collision that causes the steering column support to be displaced, showing the effects of the impact of the column support on the rocker that swivels about is rotation shaft, removing the upper clamps and releasing the solid rod so that the pedal pivots about its articulation to the hydraulic lever.

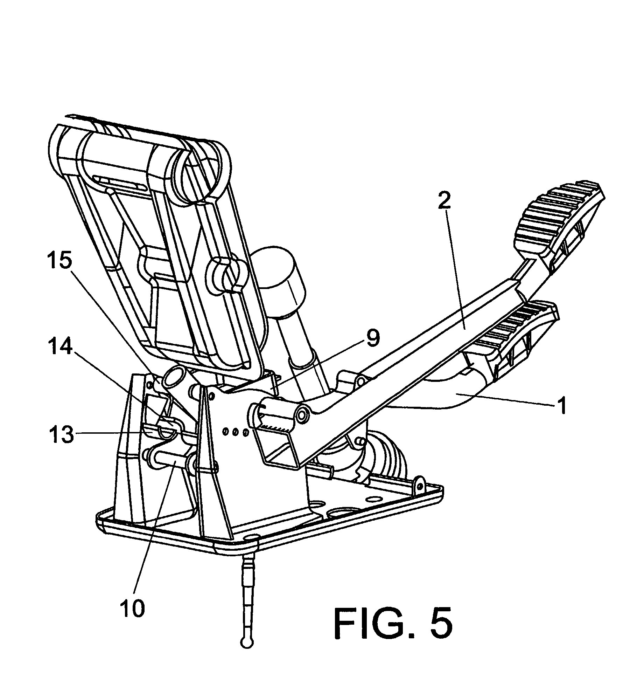

Figure 5.- Shows a perspective view of the pedal assembly after the impact.

### PREFERRED EMBODIMENT OF THE INVENTION

In view of the figures, it can be seen that the pedal assembly is based on the incorporation of a brake pedal (1), a clutch pedal (2), a steering column (3), a steering column support (4), corresponding supports (5) for the brake placed on either side of the brake pedal (1), a rotation shaft of the clutch pedal (7), a hydraulic lever (6) connected to the brake pedal (1) by a hinge and a brake contactor support (8).

With this configuration, the pedal assembly incorporates a system for releasing the brake pedal provided with a rocker (9) with a rotation shaft (10), fuses (11) and (11') joining the rocker (9) to the supports (5) and upper clamps (14) and (14') joined to the rocker (9).

In the normal operation of the pedal assembly the rocker (9) remains static and joined to the supports (5) by its rotation shaft (10) and the fuses (11) and (11').

In addition, the pedal release system is provided with lower clamps (13) and (13') joined at all times to the supports (5) that constitute the support for a solid rod (15), which acts as the rotation shaft for the brake pedal (1). In addition, the upper and lower clamps (14) and (14') are joined at all times to the rocker (9) and form together with the lower clamps (13) and (13') a cylindrical space in which the solid rod (15) is embedded, said rod (15) turning inside the aforementioned space when the brake pedal (1) is stepped on or released.

When the vehicle suffers an impact the steering column support (4) is displaced and collides with the rocker (9); the fuse elements (11) and (11') then break, releasing the rocker (9) from its union to the supports (5), and the rocker (9) will revolve about its rotation shaft (10) pushed by the steering column support (4).

The upper and lower clamps (14) and (14') turn together with the rocker (9), opening the cylindrical space inside which revolves the solid rod (15). The clamps (14) and (14') then retract together with the rocker (9) and the solid rod (15) that acted as the rotation shaft (15) for the pedal (1) will lose its upper support, thereby allowing the pedal (1) to move freely and pivot due to its weight about the articulation of the hydraulic lever (6). In this situation the pedal is not an obstacle in the advance of the steering column (3).

## Claims

1. Vehicle pedal assembly with a system for releasing the brake pedal in the event of an impact, of the type incorporating a brake pedal (1), a clutch pedal (2), a steering column (3), a steering column support (4), corresponding supports (5) for the brake placed on either side of the brake pedal (1), a rotation shaft for the clutch pedal (7), a hydraulic lever (6) connected to the brake pedal (1) by a hinge and a brake contactor support (8), **characterised in that** it incorporates a rocker (9) connected to the supports (5) of the brake by means of fuses (11) and (11') and by a rotation shaft (10), the rocker (9) remaining static during the normal operation of the brake and being joined to the upper clamps (14) and (14'), which together with the lower clamps (13) and (13') joined to the supports (5) conform a cylindrical space in which is embedded a solid rod (15) joined to the brake pedal (1) that will turn inside said space when the brake pedal (1) is stepped on or released, designed such that the rocker is opposite the steering column support (4), so that if the vehicle suffers a frontal impact the displacement of the steering column support (4) makes it collide against the rocker (9), breaking the fuses (11) and (11') and turning the rocker (9) about its rotation shaft (10), the upper clamps (14) and (14') retracting together with the rocker to release the solid rod (15), thereby allowing the brake pedal (15) to pivot freely due to its own weight about the articulation of the hydraulic lever (6) and thus no longer being an obstacle in the advance of the steering column (3).

## Patentansprüche

1. Fahrzeug-Pedalanordnung mit einem System zum Freigeben des Bremspedals bei einem Aufprall, die von dem Typ ist, der ein Bremspedal (1), ein Kupplungspedal (2), eine Lenksäule (3), eine Lenksäulenstütze (4), entsprechende Stützen (5) für die Bremse, die auf beiden Seiten des Bremspedals (1) angeordnet sind, eine Drehwelle für das Kupplungspedal (7), einen Hydraulikhebel (8), der mit dem Bremspedal (1) durch eine Gelenk- und eine Bremskontaktstütze (8) verbunden ist, enthält, **dadurch gekennzeichnet, dass** sie einen Kipphebel (9) enthält, der mit den Stützen (5) der Bremse durch Sicherungen (11) und (11') und durch eine Drehwelle (10) verbunden ist, wobei der Kipphebel (9) während der normalen Funktion der Bremse unbeweglich bleibt und mit den oberen Halterungen (14) und (14') verbunden ist, die zusammen mit den unteren Halterungen (13) und (13'), die mit den Stützen (5) verbunden sind, einen zylindrischen Raum bilden, in den eine massive Stange (15) eingebettet ist, die mit dem Bremspedal (11) verbunden ist und sich in dem Raum dreht, wenn auf das Bremspedal (1) getreten wird oder es freigegeben wird, und die so ausgelegt ist, dass der Kipphebel der Lenksäulenstütze (4) gegenüberliegt, so dass, wenn das Fahrzeug einen frontalen Aufprall erleidet, die Verschiebung der Lenksäulenstütze (4) diese an dem Kipphebel (9) anschlagen lässt, die Sicherungen (11) und (11') bricht und den Kipphebel (9) um seine Drehwelle (10) herum dreht, wobei sich die oberen Halterungen (14) und (14') zusammen mit dem Kipphebel zurückziehen und die massive Stange (15) freigeben, so dass das Bremspedal (15) aufgrund seines eigenen Gewichtes frei um die Gelenkverbindung des Hydraulikhebels (6) herum schwingen kann und so kein Hindernis bei der Vorwärtsbewegung der Lenksäule (3) mehr ist.

## Revendications

1. Ensemble de pédale de véhicule avec un système de libération de la pédale de frein dans le cas d'un impact, du type incorporant une pédale de freinage (1), une pédale de débrayage (2), une colonne de direction (3), un support de colonne de direction (4), des supports correspondants (5) pour le frein placé sur n'importe quel côté de la pédale de frein (1), un arbre de rotation pour la pédale de débrayage (7), un levier hydraulique (6) connecté à la pédale de freinage (1) par une articulation et un support de contact de freinage (8), **caractérisé en ce qu'**il incorpore une bascule (9) connectée au support (5) du frein au moyen de mèches (11, 11') et par un arbre de rotation (10), la bascule (9) restant statique durant le fonctionnement normal du frein et étant jointe aux attaches supérieures (14, 14'), qui sont avec les attaches inférieures (13, 13') jointes au support (5) formant un espace cylindrique dans lequel est incorporé une tige solide (15) jointe à la pédale de freinage (1) qui tournera dans ledit espace quand la pédale de freinage (1) est avancée ou libérée, conçue de manière telle que la bascule est opposée au support de la colonne de direction (4), de manière telle que si le véhicule subit un impact frontal, le déplacement du support de la colonne de direction (4) entre en collision contre la bascule (9), brisant les mèches (11, 11') et tournant la bascule (9) sur son arbre de rotation (10), les attaches supérieures (14, 14') se rétractant ensemble avec la bascule pour libérer la tige solide (15), autorisant ainsi la pédale de freinage (15) à pivoter librement à cause de son propre poids autour de l'articulation du levier hydraulique (6) et n'étant plus ainsi un obstacle dans l'avancée de la colonne de direction.
